# EUROPEAN PATENT SPECIFICATION

(11) **EP 1 199 017 B1**
(45) Date of publication and mention of the grant of the patent: **22.12.2004**
(21) Application number: 00122921.0
(22) Date of filing: 20.10.2000
(51) Int. Cl.: A47J 37/08

(54) **Toaster**
Toastgerät
Toasteur

(43) Date of publication of application: 24.04.2002
(73) Proprietor: Pro-duct SDA Manufacturers Ltd., Sheung Wan, Hong Kong (CN)
(72) Inventor: Gould, Neil, Pro-duct SDA Man. Ltd., Suite 1302, Sheung Wan, Hong Kong (CN)
(74) Representative: Wagner, Bernhard Peter

(56) References cited:
- DE-A- 19 747 560
- DE-C- 3 603 848
- GB-A- 329 136
- US-A- 5 673 608
- US-A- 5 735 191

## Description

The present invention relates to a toaster as described in the preamble of claim 1.

Toasters are well known in the art and are used by many people for a long time for making toast, i.e. for making sliced bread brown and crisp by placing it to direct heat. Usually toaster are adapted to make two or four pieces of toast at the same time. If more then two or four pieces of toast have to be made, the pieces of toast have to be held in a place where the toast stays warm.

Since the toast stays warmer when it is in a vertical position then in a position lying flat - face up or face down on a plate or in a bread-basket - toast racks are often used for holding warm toast.

Toast racks which are also well known in the art usually consists of two rods or bars arranged in parallel with each other and connected to each other by a plurality of bows made of wire which are arranged in parallel to each other and substantially perpendicular to the rods so as to form a plurality of spaces for accommodating slices of bread.

Although such toast racks are suitable for holding slices of bread, in particular toasted slices of bread such a toast rack needs a lot of space beside the toaster even if it is not needed.

US 5,673,608 discloses a toaster having a food cutting holder integrated therein. In particular, the toaster housing comprises a compartment for accomodating a food cutting holder housing that can be stored within the compartment like a drawer.

Instead of the drawer like food cutting holder housing a tongs or vice like cutting holder can be accomodated in the compartment of the toaster housing in such a way that the cutting holder can be pivoted from a storing position within the compartment into a working position outside the comparting or housing and vice versa.

The object underlying the present invention is to provide a new toaster which simplifies making toast and keeping toast warm.

This object is achieved by the toaster according to claim 1.

According to the present invention the drawer accommodated within the compartment in the toaster's housing includes a tray slidably mounted in the compartment to be pulled out of and pushed into the housing; wherein a toast rack is mounted on the tray, the toast rack is formed by a number of wire rack members pivotally mounted on said tray to be movable from a lying down position into an upright position relative to said tray and vice versa. Thus, the toast rack is not only an integral part but also easily to handle. In particular, a user of the toaster doesn't need to have a separate toast rack when making toast since the toast rack can be easily pulled out from its storage position within the compartment of the housing into its operating position outside the housing. Therefore, the toast rack is always available when making toast with a toaster according to the present invention.

To further simplify handling of the toast rack said wire rack members are effectively joined together so that said wire rack members are movable in synchronism with each other, wherein said wire rack members are joined by means of a wire.

Due to this embodiment it is very easy for the user to bring the toast rack in its operating position since the user only needs to pull the drawer out of the housing and to lift up by hand only one of the wire rack members from its lying down position into its upright position so that the other wire rack members follow this movement.

According to a suitable refinement of the present invention, said wire rack members are biased into their upright position by a spring so that said wire rack members are automatically moved into their upright position when said drawer is pulled out of said housing.

To ensure that the wire rack members will stay in its upright position when the toast rack is needed said wire rack members are releasably locked in their upright position.

To reduce the space needed for the toast rack within the housing of the toaster said wire rack members are each of different size so that they fit into each other when they are folded into their lying down position. Due to this feature all wire rack members can be arranged in a single plane since they are arranged in a way that is called "nested", i.e. the wire rack members are arranged in a similar way as packing a small basket in a big basket and the big basket into an even bigger basket and so on.

Therefore, the drawer carrying the toast rack can be made very flat and does not increase the height of the toaster significantly.

According to another refinement of the present invention said compartment for accommodating a drawer is provided in a base of said housing so that said toast rack fit into the housing at the bottom thereof.

According to a preferred development of the present invention said drawer comprises a sliding drawer tray preferably made of metal onto which said wire rack members are mounted and a drawer cover preferably made of plastics. This arrangement improves not only the construction of the toast rack but also the ability of preventing toast from being cooled by circulating air. In particular, the sliding drawer tray preferably made of metal which is arranged beneath the spaces for accommodating toasted slices of bread prevents or hinder air from circulating along the toasted bread due to heat convection.

Referring now to the accompanying drawings, the present invention will be described by way of example in more detail with regard to a preferred embodiment.
**Figure 1** is a schematic, perspective view of a toaster according to the present invention;
**Figure 2** is a schematic, perspective view of the toaster according to the present invention, wherein a sliding drawer tray is pulled out of the toaster's housing while the toast rack is in its lying down position;
**Figure 3** is a schematic, perspective view of the toaster according to the present invention, wherein the sliding drawer tray is its pulled out position while the toast rack is in its upright position; and
**Figure 4** is a schematic front view of the toaster according to the present invention, wherein the sliding drawer tray and the toast rack are in the same position as in figure 3.

The same reference signs are use for similar elements throughout the drawings.

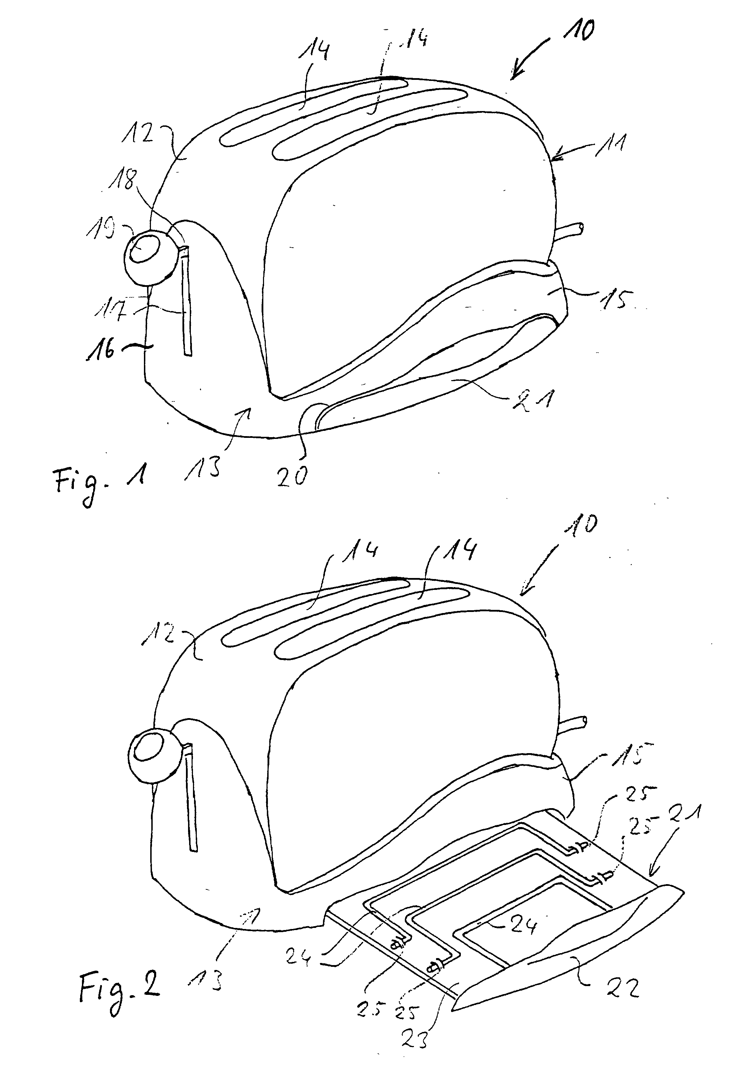

Referring to figure 1, the toaster 10 comprises a housing 11 having an upper hood-like portion 12 and a base portion 13. The upper side of the upper portion 12 is provided with two slits 14 each for accommodating one slice of bread for making toast. Depending on the specific type of toaster the slits 14 can be also adapted for accommodating two or even more slices of bread. In addition, it is also possible to provide only one slid 14 or more than two slits. The base portion 13 comprises a base 15 and a side wall 16 provided with an operating slit 17. An operating lever 18 provided with a button 19 for operating the toaster extend from the inside of the housing 11 through the operating slit 17 to the outside.

The base 15 is provided with a compartment 20 accommodating a drawer 21 which can be pulled out of and pushed into the base 15 of the housing 11.

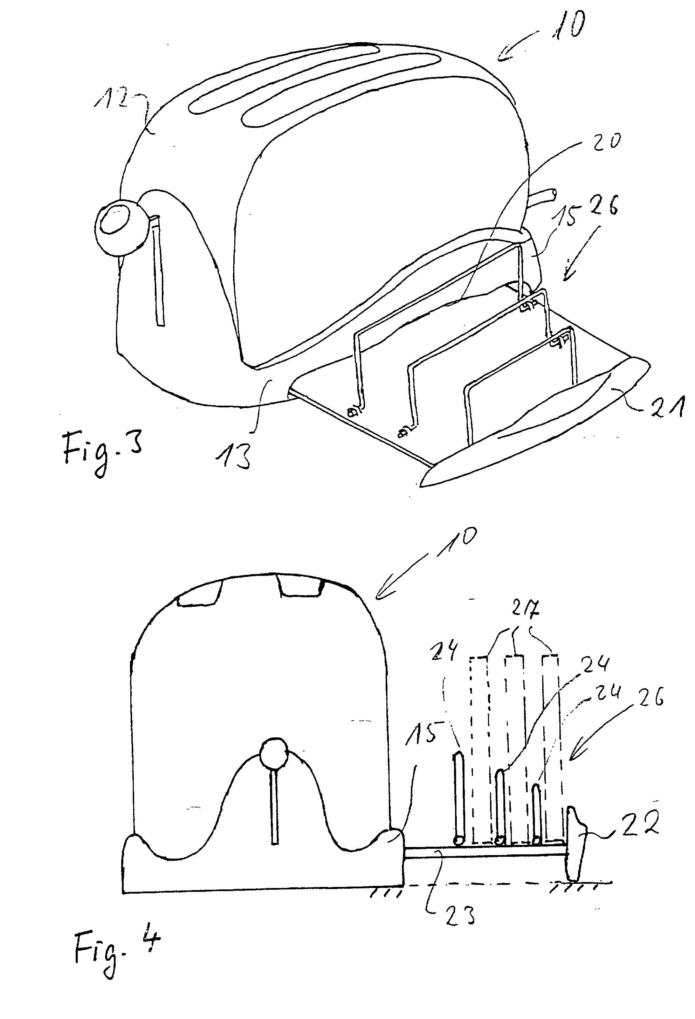

Referring now to figure 2 which shows the toaster according to the present invention with the drawer 21 pulled out of the base 15. The drawer includes a drawer cover 22 and a sliding drawer tray 23. A number of wire rack members 24 are pivoted onto the sliding drawer tray 23 by hinges 25 so that the wire rack members 24 can be swiveled up when the drawer 21 is pulled out of the base 15 of the toaster 10 to form a toast rack 26 as shown in figures 3 and 4. The hinges 25 which are shown schematically in the drawings can be of any suitable kind allowing the wire rack members 24 to be swiveled up from its lying down position shown in figure 2 into its upright position shown in figure 3.

The dimensions of each wire rack is determined with regard to the other wire rack members 24 so that each wire rack 24 fits into the other so that all wire rack members 24 are lying in one plane and being in contact with the upper side of the sliding drawer tray 23. Thus, the thickness of the sliding drawer tray 23 with the wire rack members 24 folded into its lying down position can be made small so that the compartment 20 for accommodating the drawer 22 only needs to have a relative small height. Therefore, the height of the toaster 10 will not be influenced significantly by the toast rack 26 integrated into the base 15 of the toaster 10.

Although in the drawings only three wire rack members 24 are shown for forming the toast rack it is also possible to provide more than three wire rack members 24. The more wire rack members are provided the more toast can be held.

According to a first embodiment of the present invention each wire rack 24 have to be manually lifted up into its upright position. However, according to a preferred embodiment of the present invention the wire rack members 24 are joined to each other in such a way that the wire rack members 24 will all stand up together when a user manually pulls up one of the wire rack members 24 by hand. For this purpose it is possible to join all the wire rack members 24 by a wire (not shown).

According to another embodiment of the present invention it is possible to provide a spring for biasing the wire rack members 24 into its upright position. In this case the wire rack members 24 will be lifted up by means of the spring either immediately after pulling out the drawer 21 or after releasing a locking member (not shown) provided for holding the wire rack members 24 into its lying down position against the biasing force of the spring. Although not shown in the drawings it is possible to provide a torsion spring for biasing the wire rack members 24 into the upright position and to integrate one or more torsion springs into one or more of the hinges 25.

After the drawer 21 has been pulled out of the base 15 and after lifting up the wire rack members 24 for forming the toast rack 26 this toast rack 26 is arranged just beside the toaster 10. The drawer cover 22 which is preferably made of plastic and which serves as handle for pulling out the drawer 21 is supported on the same surface as the toaster 10. Thus, the toast rack 26 formed by the sliding drawer tray 23 which is preferably made of metal by the wire rack members 24 is reliably supported on the housing side by sliding means (not shown) provided within the compartment 20 in the base 15 and on the other side by the drawer cover 22.

During toasting bread the user can keep two pieces of toast in the toast rack 26 while toasting another two slices of bread in the toaster. According to figure 4 three pieces of toast 27 are kept in the toast rack 26 between the wire rack members 24. One of these pieces of toast 27 is held between the drawer cover 22 and the adjacent wire rack member 24.

Upon finishing making toast the user only needs to fold the wire rack members 24 into their lying down position and to push the drawer 21 into the base 15. Thus, the toast rack is stored within the toaster 10 and needs no further space for storage in the kitchen.

## Claims

1. A toaster having a housing (11) provided with one or more slits each for accommodating one or more slices of bread for making toast, wherein
- said housing (11) is provided with a compartment (20) for accommodating a drawer (21), **characterized in that**
said drawer (21) includes a tray (23) slidably mounted in said compartment (20) to be pulled out of and pushed into said housing (21); and
- a toast rack (26) is mounted on said tray (23), said toast rack (26) is formed by a number of wire rack members (24) pivotally mounted on said tray (23) to be movable from a lying down position into an upright position relative to said tray (23) and vice versa.

2. The Toaster as claimed in claim 1, **characterized in that** said wire rack members (24) are effectively joined together so that said wire rack members (24) are movable in synchronism with each other.

3. The Toaster as claimed in claim 2, **characterized in that** said wire rack members (24) are joined by means of a wire.

4. The Toaster as claimed in any one of the preceding claims, **characterized in that** said wire rack members (24) are biased into their upright position by a spring so that said wire rack members (24) are automatically moved into their upright position when said drawer is pulled out of said housing (11).

5. The Toaster as claimed in any one of the preceding claims, **characterized in that** said wire rack members (24) are releasably locked in their upright position.

6. The Toaster as claimed in any one of the preceding claims, **characterized in that** said wire rack members (24) are each of different size so that they fit into each other when they are folded into their lying down position.

7. The Toaster as claimed in any one of the preceding claims, **characterized in that** said compartment (20) for accommodating a drawer (21) is provided in a base (15) of said housing (11) so that said toast rack (26) fit into the housing (11) at the bottom thereof.

8. The Toaster as claimed in any one of the preceding claims, **characterized in that** said drawer (21) comprises a sliding drawer tray (23) preferably made of metal onto which said wire rack members (24) are mounted and a drawer cover (22) preferably made of plastics.

## Patentansprüche

1. Toastgerät mit einem Gehäuse (11), das mit einem oder mehreren Schlit-Aufnahme von einem oder mehreren Scheiben Brot zur Zubereitung von Toast versehen ist, wobei
- das Gehäuse (11) mit einem Fach (20) zur Aufnahme einer Schublade (21) versehen ist, **dadurch gekennzeichnet, dass**
die Schublade (21) eine in dem Fach (20) gleitend montierte Schale (23) umfasst, die aus dem Gehäuse (21) herausgezogen und in diese hineingeschoben werden kann; und
- ein Toastständer (26) auf der Schale (23) montiert ist, der Toastständer (26) ist durch eine Anzahl von Drahtständerelementen (24) gebildet, die auf der Schale (23) schwenkbar gelagert sind, um von einer unten liegenden Position in eine aufrechte Position in Bezug auf die Schale (23) hin und zurück bewegbar zu sein.

2. Toastgerät nach Anspruch 1, **dadurch gekennzeichnet, dass** die Drahtständerelemente (24) wirkungsmässig miteinander verbunden sind, sodass die Drahtständerelemente (24) synchron bewegbar sind.

3. Toastgerät nach Anspruch 2, **dadurch gekennzeichnet, dass** die Drahtständerelemente (24) mittels eines Drahtes verbunden sind.

4. Toastgerät nach einem der vorstehenden Ansprüche, **dadurch gekennzeichnet, dass** die Drahtständerelemente (24) in ihre aufrechte Position durch eine Feder vorgespannt sind, sodass die Drahtständerelemente (24) automatisch in ihre aufrechte Position bewegt werden, wenn die Schublade aus dem Gehäuse (11) gezogen wird.

5. Toastgerät nach einem der vorstehenden Ansprüche, **dadurch gekennzeichnet, dass** die Drahtständerelemente (24) in ihrer aufrechten Position lösbar verriegelt sind.

6. Toastgerät nach einem der vorstehenden Ansprüche, **dadurch gekennzeichnet, dass** jedes der Drahtständerelemente (24) eine verschiedene Größe besitzt, sodass sie ineinander passen, wenn sie in ihre unten liegende Position gefaltet werden.

7. Toastgerät nach einem der vorstehenden Ansprüche, **dadurch gekennzeichnet, dass** sich das Fach (20) zur Aufnahme einer Schublade (21) in einer Basis (15) des Gehäuses (11) befindet, sodass der Toastständer (26) am Boden des Gehäuses (11) in dieses passt.

8. Toastgerät nach einem der vorstehenden Ansprüche, **dadurch gekennzeichnet, dass** die Schublade (21) eine gleitende Schubladenschale (23) vorzugsweise aus Metall, auf der die Drahtständerelemente (24) montiert sind und einen Schubladendeckel (22) vorzugsweise aus Plastik umfasst.

## Revendications

1. Toasteur doté d'un logement (11) prévu avec une ou plusieurs fentes, chacune pour recevoir une ou plusieurs tranches de pain pour faire un toast, dans lequel :
- ledit logement (11) est prévu avec un compartiment (20) pour recevoir un tiroir (21), **caractérisé en ce que** ledit tiroir (21) comprend un plateau (23) monté de manière coulissante dans ledit compartiment (20) qui doit être tiré de et poussé dans ledit logement (21) ; et
- une grille pour toast (26) est montée sur ledit plateau (23), ladite grille pour toast (26) est formée par un certain nombre d'éléments de grille en fil de fer (24) montés de manière pivotante sur ledit plateau (23) pour être mobile d'une position basse couchée dans une position haute par rapport audit plateau (23) et vice versa.

2. Toasteur selon la revendication 1, **caractérisé en ce que** lesdits éléments de grille en fil de fer (24) sont assemblés ensemble de manière efficace de sorte que lesdits éléments de grille en fil de fer (24) sont mobiles de manière synchrone entre eux.

3. Toasteur selon la revendication 2, **caractérisé en ce que** lesdits éléments de grille en fil de fer (24) sont assemblés au moyen d'un fil de fer.

4. Toasteur selon l'une quelconque des revendications précédentes, **caractérisé en ce que** lesdits éléments de grille en fil de fer (24) sont sollicités dans leur position haute par un ressort de sorte que lesdits éléments de grille en fil de fer (24) sont déplacés automatiquement dans leur position haute lorsque ledit tiroir est tiré hors dudit logement (11).

5. Toasteur selon l'une quelconque des revendications précédentes, **caractérisé en ce que** lesdits éléments de grille en fil de fer (24) sont bloqués de manière amovible dans leur position haute.

6. Toasteur selon l'une quelconque des revendications précédentes, **caractérisé en ce que** lesdits éléments de grille en fil de fer (24) sont chacun de taille différente de sorte qu'ils s'emboîtent les uns dans les autres lorsqu'ils sont pliés dans leur position basse couchée.

7. Toasteur selon l'une quelconque des revendications précédentes, **caractérisé en ce que** ledit compartiment (20) pour loger un tiroir (21) est prévu dans une base (15) dudit logement (11) de sorte que ladite grille pour toast (26) s'emboîte dans le logement (11) au niveau de son fond.

8. Toasteur selon l'une quelconque des revendications précédentes, **caractérisé en ce que** ledit tiroir (21) comprend un plateau de tiroir coulissant (23) de préférence réalisé en métal sur lequel lesdits éléments de grille en fil de fer (24) sont montés et un couvercle de tiroir (22) de préférence réalisé en plastique.
